# EUROPEAN PATENT APPLICATION

(11) **EP 4 806 274 A1**
(43) Date of publication of application: **16.09.2026**
(21) Application number: 23958181.2
(22) Date of filing: 09.11.2023
(51) Int. Cl.: A23L 15/00, A23B 5/005

(54) **APPARATUS AND METHOD FOR THE INDUSTRIAL PRODUCTION OF FRIED EGGS**

(71) Applicant: Petricor Alimentarias S.L., 26140 Lardero La Rioja (ES)
(72) Inventor: CLAVIJO LUMBRERAS, Miguel, 26140 LARDERO (LA RIOJA) (ES); CLAVIJO LUMBRERAS, Rubén, 26140 LARDERO (LA RIOJA) (ES); SERRANO REMON, Bizien, 26140 LARDERO (LA RIOJA) (ES)
(74) Representative: Cabinet Beau de Loménie
(86) International application number: PCT/ES2023/070663
(87) International publication number: WO 2025/099334

(57) **Abstract**

The invention relates to an apparatus and method for the industrial preparation of grilled eggs, which comprises centring modules (3) available on a main conveyor belt (1), each of which has cups (3.3) with an inverted cone shape and open at its two bases, where the lower base is located on the main conveyor belt (1) allowing sprayed oil to be placed on the open lower base of each cup (3.3), for grilling the eggs, and the open upper base of each cup (3.3) is configured to allow at least one egg to be introduced into each cup (3.3)

## Description

### Technical field

The present invention relates to the industry dedicated to the food sector and, within this sector, to the field of manufacturing pre-cooked products and, more specifically, to the industrial preparation of cooked eggs.

### State of the art

For many years, work has been carried out to develop methods, machines and apparatus for the preparation of large amounts of boiled, fried or grilled eggs that, once cooked, are packaged and supplied to restaurants, food businesses in general, etc., and are ready for consumption.

Patent GB2109670 discloses an apparatus for frying a large number of eggs simultaneously. This apparatus is made up of a plate with recesses as housings, in each of which an already shelled egg is introduced and heating means are used to fry the egg in the cooking fat or oil provided in each recess that thus retains said cooking fat or oil.

The object of patents ES2458437, ES2719331 and ES2780379 are methods for the industrial manufacture of fried eggs that re-use plates provided with recesses as small receptacles in order to house the shelled eggs, incorporating into these recesses the oil for frying which is normally carried out in ovens at a controlled temperature. As such, once the eggs have been fried, they are cooled so that the yolk remains liquid. In some cases they are pasteurised and packaged in heat-sealable containers as described, for example, in patent US2902396.

Patent EP4241576 also discloses a process for pasteurising fried eggs.

All of these patents aim to produce fried eggs and, in order to carry out frying, an amount of cooking oil or fat is required, where this frying represents a high-calorie technique.

In fact, frying generates negative changes in food, such as excessive fat increase and the formation of toxic compounds such as oxysterols and acrylamides, which make the body susceptible to cardiovascular diseases and other diseases such as cancer.

The proprietor of the present invention proposed the alternative of cooking eggs not by frying, but by grilling, as an important differentiating element with respect to the previous patents. The option of grilling eggs is a healthier alternative for enjoying eggs, with all their nutritional properties, being rich in protein, vitamin A, calcium and group B vitamins. Moreover, a fried egg has between 160-210 calories (depending on size), while a grilled egg has between 90-110 calories. In fact, an egg has an average of 90 calories, to which the drop of oil, which is about 8 calories, must be added. This means that each grilled egg has a total of about 98 calories, compared to 160-210 calories for a fried egg.

According to a study carried out by the Department of Preventive Medicine and Public Health at the Autonomous University of Madrid and Grupo EPIC and published in the American Journal of Clinical Nutrition, Volume 86, dated 1 July 2007, the relationship between diet, genetics and the development of chronic diseases was analysed. More than 40,000 volunteers from five Spanish regions responded to questionnaires in which they indicated their nutritional habits, how they cooked food and the most common dishes in their diet. Their health records were also analysed, in addition to their body mass index and waist circumference, which is related to possible risks of suffering from some type of cardiovascular disease.

The volunteers who consumed the most fried foods had a higher rate of obesity, compared to those who cooked and consumed a moderate amount of fried foods.

Patent WO2005063024 already discloses an industrial process for preparing grilled eggs, but again the solution described in this patent uses a series of recesses as moulds, wherein the shelled eggs are housed. These recesses have an upper contour and an irregular bottom so that the egg, once grilled, presents a natural shape as if it had been grilled individually on a traditional grill plate. That said, the existence of these recesses entails cleaning and hygiene problems.

The proprietor of the present invention thus developed a process that resolved these drawbacks and is included in Spanish patent ES2937711, which discloses a process for the industrial preparation of grilled eggs.

### Object of the invention

The present invention proposes an apparatus to carry out the aforementioned process for the industrial preparation of grilled eggs and a specific method to be able to carry out this process according to the following features:
According to the process described in ES2937711, the eggs entered the corresponding breaking and clearing machine, in which the shell was removed. The yolk and the white were then placed on a Teflon conveyor belt that is completely smooth, without any recesses and made of a non-stick material, such as Teflon. Oil had been previously sprayed on this conveyor belt, on the areas where the eggs would later be placed.

According to this process and before the eggs entered the corresponding breaking and clearing machine, the eggs were kept in a preservation chamber, in which they were maintained at a temperature between 2°C and 18°C, to then pass to a cooling tunnel at a temperature between 1°C and 6°C and preferably around 3°C. The room temperature, at least in that area, was controlled, not exceeding 18°C, so that the egg went from the liquid state of its white to a semi-pasty state, aiming to prevent the egg from spreading when placing it on the aforementioned conveyor belt.

Despite pre-cooling the egg and carrying out this phase of the process at a controlled room temperature, certain spreading of the egg white was not avoided and the ideal centring of its yolk was not achieved.

According to the present invention and according to the forward direction of this Teflon conveyor belt, which will be identified hereinafter as the main conveyor belt, there is a feeding unit at its beginning for elements that will be identified as centring modules.

Preferably, each centring module is made up of a Teflon plate on which elongated panels, preferably made of stainless steel, are arranged to provide the module with the necessary weight and to offer suitable hygienic conditions. Each stainless steel panel has a correlation of identical silicone parts, each of which is configured with an inverted truncated cone shape, like a cup, open at its two bases and which will be identified as a cup, preferably a silicone cup.

These centring modules aim to house an egg, once its shell has been removed, in each of their silicone cups, so that the yolk is centred with respect to the white. The assembly is correctly positioned on the main conveyor belt and, furthermore, the spreading of the white is prevented.

The centring modules are located on the main conveyor belt, either one behind the other, or, when larger productions are to be achieved, one next to the other, in a row arranged perpendicular to the longitudinal axis of the belt, so that the modules are arranged in successive rows and each of them has their theoretical longitudinal axis in a perpendicular direction with respect to the theoretical longitudinal axis of the main conveyor belt.

These centring modules on the main conveyor belt can be arranged using a manual process or an automated process. In this case, the preferred embodiment involves the arrangement, at the beginning of the main conveyor belt, of a device for moving and positioning the centring modules on the main conveyor belt. This device can be a robot with at least one arm that takes each centring module and places it on the conveyor belt at the pre-established arrangement and location.

At the end of the production line, a second robot, like the robot at the inlet, picks up each centring module and removes it from the main conveyor belt, placing it on a second conveyor belt parallel to the main one that carries the already used centring modules to the beginning of the line to be reused and to repeat the process, according to a continuous work mode.

With regards to this second conveyor belt, which returns the centring modules from the second area of the main conveyor belt, on which the eggs are already grilled, to the beginning of the same to be reused, it is envisaged that there is a unit that washes/cleans the centring modules with the pre-established frequency.

A cleaning unit for the main conveyor belt is also envisaged in the final area of the same, which is preferably located at the bottom of the belt and which, according to a non-limiting practical exemplary embodiment, can be a simple scraper.

It is important to note that the silicone cups of each centring module have a general inverted truncated cone configuration, with the particularity that they are open at their two bases. As such, when arranging the centring modules on the main conveyor belt, it is the belt itself that blocks the lower base or base with a smaller diameter where the egg is placed; while the larger base remains open, allowing an egg to enter the cup once its shell has been removed.

With this solution, when each egg enters its corresponding silicone cup, the yolk occupies a centred arrangement. The egg is correctly positioned on the main conveyor belt, in the area where the oil has been previously sprayed and, furthermore, its spreading is prevented.

It is important to keep in mind that in conventional lines for producing fried eggs, each egg is placed in a recess on the conveyor belt or in a small pot-like receptacle, completely closed by its lower base, since otherwise the oil that must be introduced in a liquid state into said receptacle to complete the frying process would come out. On the other hand, in the solution now disclosed, the silicone cups of each centring module are completely open at their lower base. Since it is a grilling, not frying, process, the oil is sprayed in a much smaller amount and it is also not in a liquid state.

The fact that the silicone cups are open at their lower base in contact with the main conveyor belt provides many advantages, since by perfectly fulfilling their aim of centring the egg and preventing its spread, the fact that they are open at their lower base makes it easier to remove the centring modules, leaving the eggs, already grilled, on the main conveyor belt. This can be understood as the unmoulding of the eggs, and it furthermore facilitates simple and more correct cleaning of the centring modules, to be able to return them again to the beginning of the production line and reuse them, according to a continuous cycle.

After the first robot, which positions the centring modules on the main conveyor belt, there is a spraying unit provided with nozzles that perform spraying on the main conveyor belt in correspondence with the number of silicone cups of the centring module or modules that pass under this spraying unit. Spraying is carried out directly on the main conveyor belt and right on the area that delimits the open lower base of each truncated conical silicone cup. The amount of oil sprayed in relation to each silicone cup is between 2.5 g and 3.5 g, preferably around 3 g, which translates into much lower oil consumption than with fried egg production lines.

After the oil spraying unit, there is the egg breaking unit that separates the shell from the yolk and the white of each egg. These breaking units are conventional and, for example, consist of a tray/hopper for collecting eggs, a body in which the shell of each egg is broken and removed, and at least one outlet channel, through which the yolk and the white of each egg flow until reaching distribution channels that take each egg to its corresponding silicone cup of the respective centring module, pouring it into same. According to a preferred embodiment, there is a correspondence between the number of distribution channels and the number of silicone cups in each transverse row of the centring module or modules.

It is envisaged that with regards to the egg breaking unit and specifically its area, where the shelled eggs come out, there is one or more artificial vision means that check that the yolk of each egg is not broken and that it is in perfect condition, so that, for example, it does not contain pieces of shell. Defective eggs are removed from the production line.

After the breaking unit, there is a heating unit that can be a conventional oven or any other means that operates by any of the currently known heating methods, such as, for example, infrared rays. Inside this heating unit or between its component parts, in the event that this unit is made up of two heating plates, arranged above and below the main belt, this main conveyor belt runs with the centring modules arranged on it and carrying the eggs in their silicone cups, so that the eggs are subjected to a temperature such that the temperature in their yolk is between 75°C and 80°C, and the temperature around each egg is between 255°C and 300°C. The time during which the eggs are subjected to this heating is between 150 and 180 seconds.

At the outlet of the heating unit, with the eggs already grilled, there is a cooling tunnel, in which the eggs are cooled to a temperature between 3°C and 10°C and preferably around 5°C.

After the cooling tunnel, there is the aforementioned second robot that removes the centring modules and positions them on the return conveyor belt to be reused, following a closed cycle.

In this way, the eggs already grilled are arranged on the Teflon main conveyor belt and can be removed manually or automatically, to be placed on heat-sealable trays.

In the automatic embodiment, at the end of the Teflon conveyor belt, there is a supply unit for heat-sealable trays that are automatically positioned relative to the main conveyor belt, to collect the already cooked eggs that will be placed on the trays through conventional solutions such as sweeping paddles or the like.

Each heat-sealable tray has a plurality of wells, where each well has a conical configuration having, for example, a diameter of 85 m/m and a depth of 25 m/m, so as to prevent the egg from moving and breaking during transport.

The heat-sealable trays are preferably made of a PET (polyethylene terephthalate) multi-layer plastic, with an EVOH layer (polyvinyl alcohol copolymer sheet), which is the layer that must be in contact with the eggs. Obviously, these trays can be made of any other material or materials used as containers for food products.

The heat-sealable trays then pass to a heat-sealing unit, in which each tray is heat-sealed with a complex multi-layer film.

At the outlet of this heat-sealing unit, there is a pasteurisation tunnel, in which the eggs are subjected to a temperature between 80°C and 100°C, for a time of no less than 10 minutes and no more than 12 minutes. Fully satisfactory tests have been carried out in which pasteurisation was carried out at 80°C for 10 minutes.

When the heat-sealable trays leave the pasteurisation unit, they pass into a cooling tunnel, in which the eggs are cooled to a temperature between 3°C and 10°C and preferably around 5°C.

Finally, and at the end of the production line, there is the corresponding final packaging unit of the product and its preparation, to be supplied to the corresponding distribution and consumption channels, which can range from domestic to industrial channels.

### Description of the figures

Figure 1 shows a diagram of the plan of a production line made according to the present invention, from which and for reasons of space, the parts of the line shown in figures 2 and 3 have been removed.
Figure 2 is an elevational view that schematically shows the part of the line corresponding to oil spraying and egg breaking.
Figure 2.1 shows an enlarged detail of the spraying area indicated in figure 2.
Figure 2.2 shows an enlarged detail of how each egg is placed in the corresponding silicone cup.
Figure 3 is a plan view that schematically shows the final part of the output belt (14) not represented in figure 1.
Figure 4 is a perspective view that shows a possible non-limiting practical exemplary embodiment of a centring module (3).
Figure 5 corresponds to the cross section V-V indicated in figure 4.
Figure 6 is a perspective and schematic view of another possible practical embodiment of a centring module (3), in which one of its silicone cups (3.3) has been represented in the assembly phase.
Figure 7 is a top plan view of a heat-sealable tray (9), according to a possible practical exemplary embodiment.
Figure 8 is the elevational view of figure 7.
Figure 9 is a perspective view of a heat-sealable tray (9).

### Detailed description of the invention

The present invention relates to an apparatus for the industrial preparation of grilled eggs and the applicable method with said apparatus.

The apparatus is a production line that is made up of a first conveyor belt that will be identified as the main conveyor belt (1), which is made of a material suitable for receiving the eggs to be cooked on it and for grilling them on the same. The material that makes up the main conveyor belt (1) is preferably Teflon.

At least the main conveyor belt (1) and preferably the components of the line that must be in contact with the eggs until they are cooked and finally packaged will be located in a clean room with a controlled temperature, wherein the temperatures do not exceed 18°C and will preferably be around 6°C.

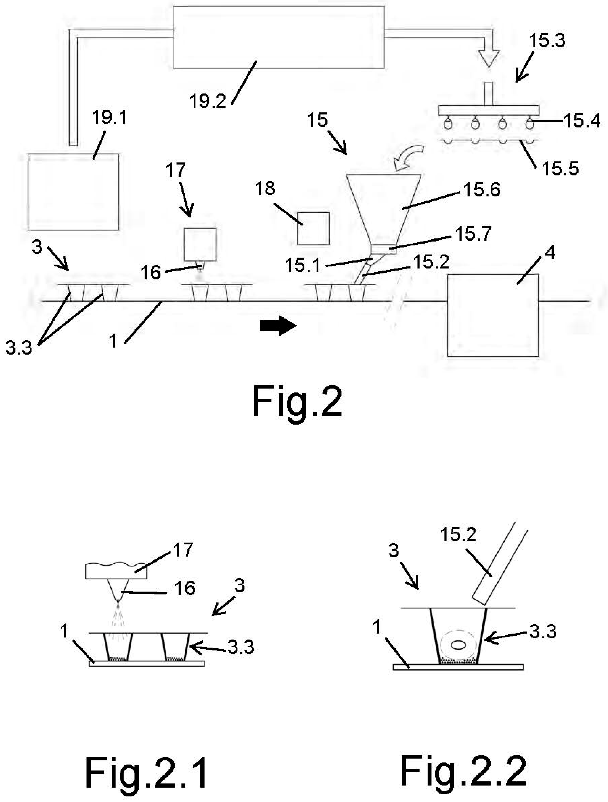

In a first phase of pre-cooling, the eggs are stored and kept in a preservation chamber (19.1), see figure 2, in which they are maintained at a temperature between 2°C and 18°C, to then pass to a cooling tunnel (19.2), in which they are at a temperature between 1°C and 6°C and preferably around 3°C. The room temperature, at least in that area, was controlled, not exceeding 18°C, so that the egg went from the liquid state of its white to a semi-pasty state, aiming to prevent, as much as possible, the egg from spreading when placing it on the aforementioned main conveyor belt (1).

In fact, the objective of cooling the egg to this temperature of 3°C in an environment that also has a controlled temperature no higher than 18°C is such that when the process of grilling the egg is subsequently carried out and the heat is received from the first heating means, the egg does not move from its place. In other words, it does not spread and the yolk remains centred.

The eggs are arranged inside the preservation chamber (19.1) in the cartons or packaging in which they are received, stored in boxes on pallets, and when the process is going to start, they are passed from the preservation chamber (19.1) to the cooling tunnel (19.2) in the very cartons or packaging in which they were stored.

At the outlet of the cooling tunnel (19.2), as shown in figure 2, the existence of at least one handling machine (15.3) is envisaged, which, by means of suction cups (15.4), takes the eggs from the corresponding carton or packaging tray (15.5), lifts them and carries them to the reception hopper (15.6) of a conventional breaking unit (15), in which the shell of each egg is broken and this shell is separated from the whole interior of the egg, formed by the yolk and the white.

Up to this point, all of this corresponds to a process that is already known, in which, despite pre-cooling the egg and carrying out this phase of the process at a controlled room temperature, certain spreading of the egg white was not avoided and the ideal centring of its yolk was not achieved.

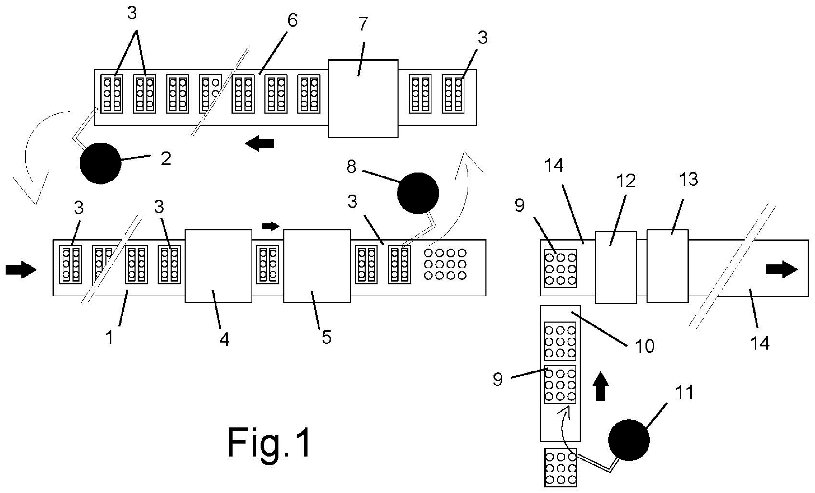

According to the present invention, as shown in figure 1, at the beginning of the main conveyor belt (1), according to its forward direction, there is a feeding unit (2) for elements that will be identified as centring modules (3).

The feeding unit (2) is responsible for moving these centring modules (3) and correctly arranging them on the main conveyor belt (1). This feeding unit (2) can be a robot with at least one arm that takes each centring module (3) and places it on the main conveyor belt (1) according to the pre-established arrangement and location.

In the second area, i.e., the final area of the main conveyor belt (1), there is a second feeding unit (8), also preferably made up of a robot that, when the eggs are already grilled, picks up each centring module (3) and lifts it, so that only the already cooked eggs remain on the main conveyor belt (1).

After the second feeding unit (8) has lifted each centring module (3), it moves it by rotation, removing it from the main conveyor belt (1), and carries it until it is placed on a second conveyor belt that will be identified as the return conveyor belt (6), which extends parallel to the main conveyor belt (1).

In this way, the already used centring modules (3) are returned by the return conveyor belt (6) to the beginning of the production line to be reused and to repeat the process, according to a continuous work mode.

With regards to this second return conveyor belt (6), it is envisaged that there is a washing unit (7) that washes/cleans the centring modules (3) with the pre-established frequency. To do so, the return conveyor belt (6) is preferably made of a stainless metal material with a grid construction that allows the washing and cleaning liquid to pass to lower trays for collection and, where appropriate, for reuse.

Cleaning means for the main conveyor belt (1) are also envisaged, which would preferably be located at the bottom of the main conveyor belt (1). According to a non-limiting practical exemplary embodiment, these cleaning means can be simple scrapers.

The centring modules (3) can be collected by the first feeding unit (2) directly from the return conveyor belt (6), or the centring modules (3) can be stacked at the end of the said belt, one on top of the other in a stacking column from which they are collected by the first feeding unit (2).

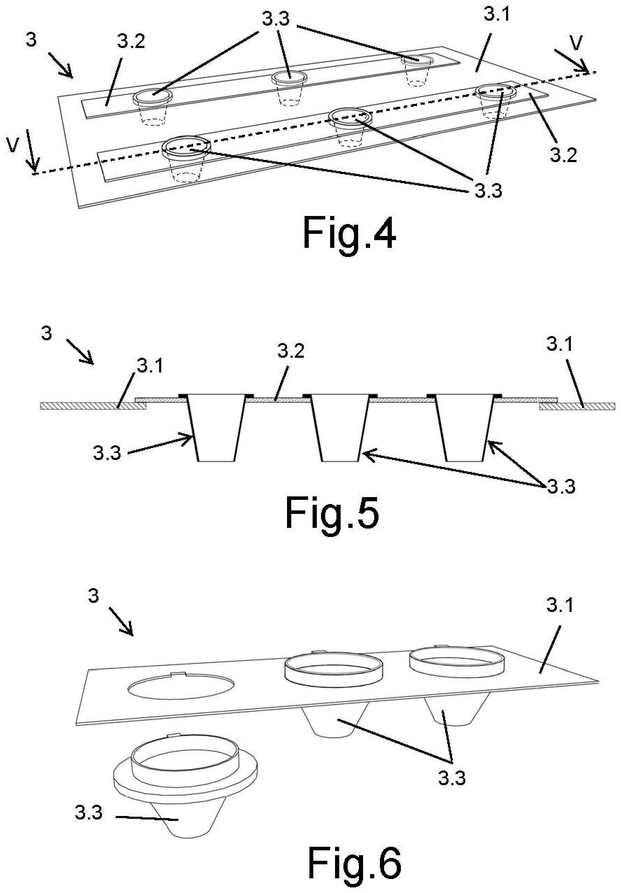

According to a preferred embodiment, represented in figures 4 and 5, each centring module (3) is made up of a support and handling plate (3.1), preferably made of Teflon, on which elongated panels (3.2), preferably made of stainless steel, are arranged to provide each centring module (3) with the necessary weight and to offer suitable hygienic conditions. Each stainless steel panel (3.2) has a correlation of identical silicone parts, each of which is configured with an inverted truncated cone shape, like a cup, open at its two bases and which will be identified as a cup (3.3). Figure 4 shows three cups (3.3) for each panel (3.2), but this is simply a non-limiting exemplary embodiment, since the number of cups, their configuration and their construction can vary without altering the essentiality of the invention.

These centring modules (3) aim to house an egg, once its shell has been removed, in each of their cups (3), so that the yolk is centred with respect to the white. The assembly is correctly positioned on the main conveyor belt (1) and, furthermore, the spreading of the white is prevented.

The centring modules (3) are located on the main conveyor belt (1), either one behind the other, or, when larger productions are to be achieved, one next to the other, in a transverse row with respect to the forward longitudinal axis of the main conveyor belt (1), so that the centring modules (3) are arranged in successive rows and each of them has their theoretical longitudinal axis in a perpendicular direction with respect to the theoretical longitudinal axis of the main conveyor belt (1).

It is important to note that the silicone cups (3.3) of each centring module (3) have a general inverted truncated cone configuration, with the particularity that they are open at their two bases. As such, when arranging the centring modules (3) on the main conveyor belt (1), it is said belt that blocks the lower base or base with a smaller diameter of each cup (3.3), while the larger base remains open, allowing an egg to enter the cup (3.3) once its shell has been removed.

With this solution, when each egg enters its corresponding silicone cup (3.3), the yolk occupies a centred arrangement. Furthermore, the egg is correctly positioned on the main conveyor belt (1), in an area where oil has been previously sprayed, as will be described in detail later. This thus prevents the eggs from spreading.

It is important to keep in mind that in conventional lines for producing fried eggs, each egg is placed in a recess on the conveyor belt or in a small pot-like receptacle, completely closed by its lower base, since otherwise the oil that must be introduced in a liquid state into said receptacle to complete the frying process would come out. On the other hand, in the solution now disclosed, the silicone cups (3.3) of each centring module (3) are completely open at their lower base. Since it is a grilling, not frying, process, the oil is sprayed in a much smaller amount and it is also not in a liquid state, but it has been atomised into small spray-type particles.

The fact that the silicone cups (3.3) are open at their lower base that is in contact with the main conveyor belt (1) provides many advantages, since by perfectly fulfilling their aim of centring the egg and preventing its spread, the fact that they are open at their lower base makes it easier to remove the centring modules (3), leaving the eggs, already grilled, on the main conveyor belt (1). This can be understood as the unmoulding of the eggs, and it furthermore facilitates simple and more correct cleaning of the centring modules (3), to be able to carry them again to the beginning of the production line and reuse them, according to a continuous cycle.

It is envisaged that both the plate (3.1), as well as the panels (3.2) and the cups (3.3) that make up each centring module (3) are independent elements that are coupled in such a way that they can be separated from each other and they can remain joined, for example, through clipping solutions, the combining of shapes or any other similar solution. The embodiment shown in the figures, more specifically in figure 6, shows a ring in the upper part of the cup (3.3) that allows the plate (3.1) to rest on it since it has a corresponding geometry. It also has a projection that allows for the fitting and positioning between the plate (3.1) and the cups (3.3). On the other hand, it is also envisaged that these three elements form an assembly unit so that they cannot be separated from each other, for example, by embedding the panels (3.2) in the plate (3.1) and by overmoulding the cups (3.3) on the panels (3.2).

Figure 6 shows a practical embodiment variant of the centring modules (3) according to which the silicone cups (3.3) are arranged directly on a support and handling plate (3.1), also preferably made of Teflon. In this case and as was the case in the previous embodiment, the cups (3.3) can form, with their respective plate (3.1), an inseparable assembly unit or they can be assembled so that they can be removed from the plate (3.1).

Obviously, the centring modules (3) can have different practical embodiments as long as the essence of being made up of at least one cup (3.3) having an inverted cone shape and open at its two bases is maintained, with the arrangement of this cup or cups (3.3) on a support and handling plate (3.1).

It should also be noted that to assist in the positioning of the cups (3.3) on the main belt (1) and to also help ensure that there is no spreading of each egg white, it is envisaged that the main conveyor belt (1) has slightly protruding formations that completely or partially surround the lower base of each cup (3.3). These formations may consist of the material that makes up the main conveyor belt (1), as ribs, so that these protruding formations and the main conveyor belt (1) are a single piece, or they are false elements duly fixed on the main conveyor belt (1).

As shown in figure 2, after the robot that makes up the first feeding unit (2) responsible for arranging the centring modules (3) on the main conveyor belt (1), there is a spraying unit (17), provided with spray nozzles (16). Spraying is carried out directly on the main conveyor belt (1) and right on the area that delimits the open lower base of each cup (3.3), see figure 2.1. The amount of oil sprayed in relation to each cup (3.3) is between 2.5 g and 3.5 g, preferably around 3 g, which translates into much lower oil consumption than with fried egg production lines.

According to a preferred embodiment, the number of spray nozzles (16) is equal to the number of cups (3.3) that pass under the spraying unit (17), so that in each oil spraying action, this action is carried out simultaneously on the open base of all the cups (3.3) in a transverse row. However, as a practical embodiment variant, it is also envisaged that one or more spray nozzles (16) are mounted with the capacity to move in a transverse direction with respect to the forward direction of the main conveyor belt (1), so that in their movement they perform successive spraying on the cups (3.3) of at least one transverse row. To achieve this, one or more spray nozzles (16) would be mounted on carts, using, for example, a rack and pinion solution, and they can move in a transverse direction with respect to the forward direction of the main conveyor belt (1).

After the spraying unit (17), there is the egg breaking unit (15) that separates the shell from the yolk and the white of each egg. These breaking units (15) are conventional and, for example, consist of the corresponding tray or hopper (15.6) for collecting eggs, a body (15.7) in which the shell of each egg is broken and removed, and at least one outlet channel (15.1), through which the yolk and the white of each egg flow until reaching distribution channels (15.2), see figure 2.2, that take each egg to its corresponding cup (3.3) of the respective centring module (3), pouring it into same. According to a preferred embodiment, there is a correspondence between the number of distribution channels (15.2) and the number of cups (3.3) in each transverse line of each centring module or modules (3).

It is envisaged that with regards to the egg breaking unit (15) and specifically its area, where the shelled eggs come out, there is one or more artificial vision means (18) that check that the yolk of each egg is not broken and that it is in perfect condition, so that, for example, it does not contain pieces of shell. Defective eggs are removed from the production line.

After the breaking unit (15), as shown in figure 2, there is a heating unit (4) that can be a conventional oven or any means that operates by any of the currently known heating methods, such as, for example, infrared rays. Inside this heating unit (4) or between its component parts, in the event that this unit is made up of two heating plates, arranged above and below the main conveyor belt (1), the main conveyor belt (1) runs with the centring modules (3) arranged on it and carrying the eggs in their cups (3.3), so that the eggs are subjected to a temperature, in which their yolk is at a temperature between 75°C and 80°C, and the temperature around each egg is between 255°C and 300°C. The time during which the eggs are subjected to this heating is no less than between 150 and 180 seconds, although this time is a function of the temperature so that, for example, satisfactory tests have been carried out in which the temperature around the egg was 160°C and the time was between 240 and 360 seconds.

At the outlet of the heating unit (4), with the eggs already grilled, there is a cooling tunnel (5), in which the eggs are cooled to a temperature between 3°C and 10°C and preferably around 5°C.

After the cooling tunnel (5), there is the aforementioned second feeding unit (8), which removes the centring modules (3) from the main conveyor belt (1) and positions them on the return belt (6) to be reused, following a closed cycle.

In this way, the eggs already grilled are arranged on the main conveyor belt (1) and can be removed manually or automatically, to be placed on heat-sealable trays (9).

In the automatic embodiment, as shown in figure 1, at the end of the main conveyor belt (1), there is an output conveyor belt (14) and, correspondingly, a conveyor belt (10) for the supply of the heat-sealable trays (9) that are automatically positioned relative to the main conveyor belt (1), to collect the already cooked eggs that will be placed on the heat-sealable trays (9) through conventional solutions such as sweeping paddles or the like.

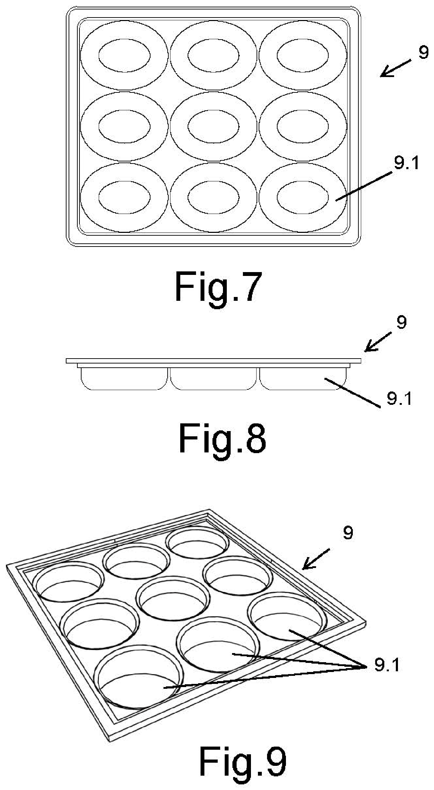

As shown in figures 7, 8 and 9, each heat-sealable tray (9) has a plurality of wells (9.1), where each well (9.1) has a configuration of a certain cone shape, to favour stacking and unstacking of the heat-sealable trays (9). Each well (9.1) has dimensions such as, for example, a diameter of 85 m/m and a depth of 25 m/m, so as to prevent the egg from moving and breaking during transport.

The heat-sealable trays (9) are preferably made of a PET (polyethylene terephthalate) multi-layer plastic, with an EVOH layer (polyvinyl alcohol copolymer sheet), which is the layer that must be in contact with the eggs. Obviously, these heat-sealable trays (9) can be made of any other material or materials used as containers for food products.

The heat-sealable trays (9) are carried by the belt (14) to then pass to a heat-sealing unit (12), see figure 1, in which each tray (9) is heat-sealed with a complex multi-layer film.

At the outlet of this heat-sealing unit (12), there is a pasteurisation tunnel (13), in which the eggs are subjected to a temperature between 80°C and 100°C, for a time of no less than 10 minutes and no more than 12 minutes. Fully satisfactory tests have been carried out in which pasteurisation was carried out at 80°C for 10 minutes.

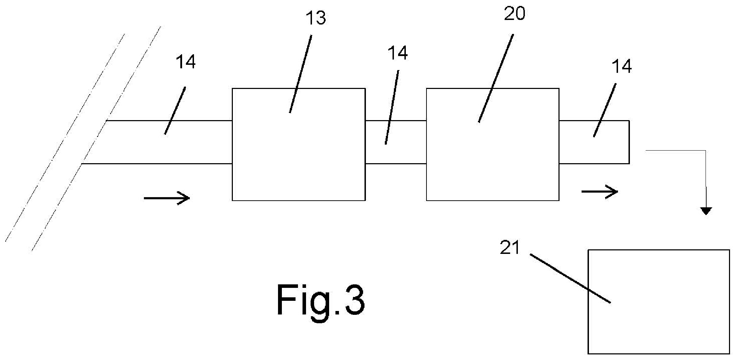

When the heat-sealable trays (9) leave the pasteurisation unit (13), they pass into a cooling tunnel (20), see figure 3, in which the eggs are cooled to a temperature between 3°C and 10°C and preferably around 5°C.

Finally, and at the end of the production line, there is the corresponding packaging unit (21), to carry out the final packaging of the product and its preparation, to be supplied to the corresponding distribution and consumption channels, which can range from domestic to industrial channels.

Obviously, the use of robots to fulfil the functions of the feeding units (2 and 8), as well as for feeding the heat-sealable trays (9), is envisaged to achieve the most automated embodiment possible of the production line, while allowing this line to likewise function under a concept of manual operation in which operators perform these functions.

## Claims

1. An apparatus for the industrial preparation of grilled eggs, **characterised in that** it comprises centring modules (3) available on a main conveyor belt (1), each of which has cups (3.3) with an inverted cone shape and open at its two bases, where the lower base is located on the main conveyor belt (1) allowing sprayed oil to be placed on the open lower base of each cup (3.3), for grilling the eggs, and the open upper base of each cup (3.3) is configured to allow at least one egg to be introduced into each cup (3.3).

2. The apparatus for the industrial preparation of grilled eggs, according to the preceding claim, wherein, with regards to a starting area of the main conveyor line (1), there is a feeding unit (2) that supplies the centring modules (3) and places them on the main conveyor belt (1); and wherein in a second area of the main conveyor belt (1) where the already grilled eggs come out, there is a second feeding unit (8) that removes the centring modules (3) and places them on a second return conveyor belt (6), by means of which the centring modules (3) return to the starting part of the main conveyor belt (1) to be reused.

3. The apparatus for the industrial preparation of grilled eggs, according to the first and second claims, wherein the two feeding units (2 and 8) are respective robots.

4. The apparatus for the industrial preparation of grilled eggs, according any one of the preceding claims, wherein each centring module (3) comprises at least one cup (3.3) having an inverted cone shape and open at its two bases, with the arrangement of this cup or cups (3.3) on a support and handling plate (3.1).

5. The apparatus for the industrial preparation of grilled eggs, according to any one of the preceding claims, wherein after the first feeding unit (2), it comprises an oil spraying unit (17) for spraying the area of the open lower base of each cup (3.3), where each oil spraying action is carried out relative to the open base of all the cups (3.3) in a transverse row with respect to the forward direction of the main conveyor belt (1).

6. The apparatus for the industrial preparation of grilled eggs, according to the preceding claim, wherein the amount of oil sprayed by the oil spraying unit (17) in relation to each cup (3.3) is between 2.5 g and 3.5 g, preferably around 3 g.

7. The apparatus for the industrial preparation of grilled eggs, according to claims 5 or 6, wherein after the spraying unit (17), there is a breaking unit (15) and, with regards to its output of the already shelled eggs, there are artificial vision means (18) that check the state of each egg.

8. The apparatus for the industrial preparation of grilled eggs, according to any one of the preceding claims, wherein with regards to a second area of the main conveyor belt (1) where the already grilled eggs come out, there is an output conveyor belt (14), on which heat-sealable trays (9) with wells (9.1) for housing the already grilled eggs are placed.

9. The apparatus for the industrial preparation of grilled eggs, according to the preceding claim, wherein the output belt (14) comprises a heat-sealing unit (12), wherein each tray is heat-sealed with a complex multi-layer film; a pasteurisation tunnel (13) for the eggs; and a cooling tunnel (20) for the already pasteurised eggs.

10. The apparatus for the industrial preparation of grilled eggs, according to claims 8 or 9, wherein each heat-sealable tray (9) is preferably made of a multi-layer plastic, for example, made of polyethylene terephthalate (PET), with the layer that must be in contact with the eggs being formed by a polyvinyl alcohol copolymer sheet (EVOH).

11. A method for the industrial preparation of grilled eggs, **characterised in that** in a first phase, on the main conveyor belt (1), there are centring modules (3) with cups (3.3) having an inverted cone shape and open at its two bases, where the lower base is located on the main conveyor belt (1); and **in that** in a second phase, on the open lower base of each cup (3.3) of the centring modules (3), oil spraying is carried out for grilling the eggs and at least one egg is introduced into each cup (3.3) through the open upper base of each cup (3.3).

12. The method for the industrial preparation of grilled eggs, according to the preceding claim, wherein in a third phase, the centring modules (3) pass through a heating unit (4), to then and in a fourth phase pass to a cooling tunnel (5).

13. The method for the industrial preparation of grilled eggs, according to any one of claims 11 or 12, **characterised in that** in a fifth phase, the already grilled eggs are placed on heat-sealable trays (9) which, by means of an output conveyor belt (14), are taken through a heat-sealing unit (12), wherein each tray (9) is heat-sealed with a complex multi-layer film; then passing through a pasteurisation tunnel (13) for the eggs and a cooling tunnel (20) for the already pasteurised eggs.

14. The method for the industrial preparation of grilled eggs, according to any one of claims 11 to 13, wherein the centring modules (3) are arranged on the main conveyor belt (1) by means of a first feeding unit (2) and, once grilled, a second feeding unit (8) removes the centring modules (3) and places them on a second return conveyor belt (6), by means of which the centring modules (3) return to the starting part of the main conveyor belt (1) to be reused.

15. The method for the industrial preparation of grilled eggs, according to claims 13 or 14, wherein the heat-sealable trays (9) are supplied from a conveyor belt (10), on which the heat-sealable trays (9) are placed by a feeding unit (11).

16. The method for the industrial preparation of grilled eggs, according to any one of claims 11 to 15, wherein the amount of oil sprayed in relation to each cup (3.3) is between 2.5 g and 3.5 g, preferably around 3 g.
